# EUROPÄISCHE PATENTSCHRIFT

(11) **EP 2 733 073 B1**
(45) Veröffentlichungstag und Bekanntmachung des Hinweises auf die Patenterteilung: **15.03.2017**
(21) Anmeldenummer: 13186395.3
(22) Anmeldetag: 27.09.2013
(51) Int. Cl.: B64D 11/06

(54) **Fahrzeugsitz**
Vehicle seat
Siège de véhicule

(30) Priorität: 24.10.2012 DE 102012020847
(43) Veröffentlichungstag der Anmeldung: 21.05.2014
(73) Patentinhaber: Recaro Aircraft Seating GmbH & Co. KG, 74523 Schwäbisch Hall (DE)
(72) Erfinder: Hasegawa, Satoshi, 74199 Untergruppenbach (DE); Ko, Djunianto, 74523 Schwäbisch Hall (DE); Lohrmann, Jochen, 71332 Waiblingen (DE); Brönner, Vasco, 74545 Michelfeld-Neunkirchen (DE); Roderwald-Vincze, Timea, 74523 Schwäbisch Hall (DE); Vnukovski, Juri, 74629 Pfedelbach (DE)
(74) Vertreter: Daub, Thomas

(56) Entgegenhaltungen:
- EP-A1- 1 707 486
- EP-A1- 1 759 991
- EP-A1- 2 275 345
- WO-A1-2007/061381
- FR-A1- 2 842 497
- FR-A1- 2 942 456
- US-A1- 2012 223 186

## Beschreibung

### Stand der Technik

Die Erfindung betrifft einen Fahrzeugsitz nach dem Oberbegriff des Patentanspruchs 1.

Es ist bereits ein Fahrzeugsitz, insbesondere ein Flugzeugsitz, mit zumindest einer Sitzvorrichtung, die zumindest eine Sitzeinheit und zumindest eine Bankeinheit aufweist, die in einer zumindest im Wesentlichen senkrecht zu einer Sitzeinheitenlängsrichtung ausgerichteten Querrichtung an einer Seite der Sitzeinheit angeordnet ist, vorgeschlagen worden.

Ein derartiger Sitz ist beispielsweise aus der FR-A1-2942456 bekannt.

Die Aufgabe der Erfindung besteht insbesondere darin, eine gattungsgemäße Vorrichtung mit verbesserten Eigenschaften hinsichtlich eines Komforts für einen Passagier bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Fahrzeugsitz, insbesondere einem Flugzeugsitz, mit zumindest einer Sitzvorrichtung, die zumindest eine Sitzeinheit und zumindest eine Bankeinheit aufweist, die in einer zumindest im Wesentlichen senkrecht zu einer Sitzeinheitenlängsrichtung ausgerichteten Querrichtung an einer Seite der Sitzeinheit angeordnet ist.

Die Bankeinheit weist in zumindest einer Sitzstellung zumindest einen Bankeinheitenteilbereich auf, der die Sitzeinheit bezüglich der Sitzeinheitenlängsrichtung nach hinten überragt. Unter einer "Bankeinheit" soll insbesondere eine Einheit verstanden werden, die zumindest eine Bankeinheitenoberfläche aufweist. Insbesondere ist die Bankeinheitenoberfläche als eine Sitzfläche

Die Bankeinheit ist in einer zumindest im Wesentlichen senkrecht zu der Sitzeinheitenlängsrichtung ausgerichteten Querrichtung an einer Seite der Sitzeinheit angeordnet und ist als eine Liegefläche ausgebildet. Insbesondere ist die Bankeinheit als ein Seitenmöbeistück der Sitzeinheit ausgebildet. Vorzugsweise ist die Bankeinheit in einer aufrechten Stellung der Sitzeinheit bezüglich der Querrichtung an einer Seite der Sitzbodeneinheit der Sitzeinheit angeordnet. Insbesondere ist die Bankeinheit zumindest zu einem Großteil in einer zumindest im Wesentlichen senkrecht zu einer Sitzeinheitenlängsrichtung ausgerichteten Querrichtung seitlich neben der Sitzeinheit angeordnet. Vorzugsweise ist ein Großteil der Bankeinheit in zumindest einer aufrechten, als Normalstellung bezeichneten Sitzstellung, in welcher eine Rückenlehneneinheit der Sitzeinheit zumindest im Wesentlichen senkrecht zu einem Boden, insbesondere zu einer Aufständerfläche der Sitzeinheit, ausgerichtet ist, bezüglich der Querrichtung seitlich neben der Sitzeinheit angeordnet. Insbesondere ist der Großteil der Bankeinheit in zumindest einer als Komfortstellung bezeichneten Sitzstellung, in welcher eine Rückenlehneneinheit der Sitzeinheit zumindest im Wesentlichen parallel zu dem Boden ausgerichtet ist, bezüglich der Querrichtung seitlich neben der Sitzeinheit angeordnet. Insbesondere ist die Bankeinheit neben einem Seitenbereich der Sitzeinheit angeordnet. Vorzugsweise bildet der Seitenbereich der Sitzeinheit bezüglich der Querrichtung eine seitliche Begrenzung der Sitzeinheit aus. Insbesondere weist der Seitenbereich der Sitzeinheit zumindest eine Längserstreckung auf, die in zumindest einer aufrechten Stellung der Rückenlehneneinheit der Sitzeinheit mit einer von einem Großteil der Rückenlehneneinheit gebildeten Fläche einen Winkel in einem Bereich von 75° bis 105° einschließt. Insbesondere schneidet eine zumindest im Wesentlichen parallel zu der Querrichtung ausgerichtete Gerade ausgehend von einem Mittelpunkt der Sitzbodeneinheit der Sitzeinheit und bei Fortschreiten in der Querrichtung zunächst den Seitenbereich der Sitzeinheit und bei weiterem Fortschreiten in der Querrichtung die Bankeinheit. Vorzugsweise ist die Bankeinheit dazu vorgesehen, als eine Ablagefläche, beispielsweise für Handgepäck und/oder Kleidung eines auf der Sitzeinheit sitzenden Passagiers, verwendet zu werden. Insbesondere ist die Bankeinheitenoberfläche der Bankeinheit dazu vorgesehen, als die Sitzfläche für ein den auf der Sitzeinheit sitzenden Passagier begleitendes Kind verwendet zu werden. Vorzugsweise ist die Bankeinheit dazu vorgesehen, als die Liegefläche für den auf der Sitzeinheit sitzenden Passagier verwendet zu werden. Unter der Wendung, dass eine Gerade und/oder Ebene "zumindest im Wesentlichen senkrecht" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene einen Winkel einschließt, der um weniger als 15°, vorzugsweise um weniger als 10°und insbesondere um weniger als 5° von einem Winkel von 90° abweicht. Unter einer "Sitzeinheitenlängsrichtung" soll insbesondere eine Richtung verstanden werden, die zumindest im Wesentlichen parallel zu einer Sitzrichtung ausgerichtet ist. Unter einer "Sitzrichtung" soll insbesondere eine Richtung verstanden werden, welche bei einem ordnungsgemäßen Sitzen eines Passagiers, insbesondere bei parallel ausgerichteten Oberschenkeln des Passagiers, im Wesentlichen der Richtung entspricht, in welcher sich die Oberschenkel des Passagiers vom Gesäß bis zum Kniebereich erstrecken. In einer aufrechten Stellung der Sitzeinheit, in welcher die Rückenlehneneinheit zumindest im Wesentlichen senkrecht zu einem Boden ausgerichtet ist, ist die Sitzrichtung zumindest im Wesentlichen parallel zu dem Boden und zumindest im Wesentlichen senkrecht zu der von der Rückenlehneneinheit gebildeten Rückenlehnenfläche ausgerichtet. Wird die Sitzvorrichtung für einen Fluggastsitz verwendet, entspricht die Sitzrichtung typischerweise der Flugrichtung. Unter der Wendung, dass eine Gerade und/oder Ebene "zumindest im Wesentlichen parallel" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene einen Winkel einschließt, der um weniger als 5°, vorzugsweise um weniger als 3° und insbesondere umweniger als 1° von einem Winkel von 0° abweicht. Unter einer "Querrichtung" soll insbesondere eine Richtung verstanden werden, die zumindest im Wesentlichen senkrecht zu der Sitzeinheitenlängsrichtung ausgerichtet ist. Insbesondere ist die Querrichtung zumindest im Wesentlichen senkrecht zu der Sitzrichtung ausgerichtet. Vorzugsweise ist die Querrichtung zumindest im Wesentlichen parallel zu dem Boden, insbesondere zu der Aufständerfläche der Sitzeinheit, ausgerichtet. Unter einer "Seite" der Sitzeinheit soll insbesondere ein eine Begrenzung der Sitzeinheit ausbildender Bereich der Sitzeinheit verstanden werden. Unter der Wendung, dass der Bankeinheitenteilbereich der Bankeinheit in zumindest einer Sitzstellung "die Sitzeinheit bezüglich der Sitzeinheitenlängsrichtung nach hinten überragt", soll insbesondere verstanden werden, dass in der Sitzstellung eine Tangente an eine Seite der Sitzeinheit, in welcher die Rückenlehneneinheit der Sitzeinheit angeordnet ist, die Bankeinheit schneidet und in zumindest zwei Teilbereiche unterteilt, wobei einer der Teilbereiche auf einer in Sitzeinheitenlängsrichtung gelegenen Seite der Tangente angeordnet ist und der bezüglich der Sitzeinheitenlängsrichtung nach hinten über die Sitzeinheit überragende Bankeinheitenteilbereich auf einer der in Sitzeinheitenlängsrichtung gelegenen Seite der Tangente gegenüberliegenden Seite der Tangente angeordnet ist. Insbesondere ist die Tangente an die Seite der Sitzeinheit, in welcher de Rückenlehneneinheit der Sitzeinheit angeordnet ist, zumindest im Wesentlichen parallel zu der Querrichtung ausgerichtet. Unter "vorgesehen" soll insbesondere speziell ausgelegt und/oder ausgestattet verstanden werden. Durch eine erfindungsgemäße Ausgestaltung kann vorteilhaft ein Fahrzeugsitz mit möglichst viel Raum für einen Passagier, insbesondere selbst bei einer engen Bestuhlung in einer Passagierkabine, in welcher der Fahrzeugsitz angeordnet ist, bereitgestellt werden, wodurch ein Komfort für den Passagier erhöht werden kann. Zudem kann vorteilhaft ein Fahrzeugsitz flexibel als Sitzfläche, als Liegefläche und/oder als Ablagefläche verwendet werden. Weiterhin kann vorteilhaft die Bankeinheit als ein Stauraum für Gegenstände des Passagiers verwendet werden.

Ferner wird vorgeschlagen, dass die Bankeinheit eine Bankeinheitenoberfläche aufweist, die in zumindest einer Sitzstellung mit zumindest einer Sitzbodeneinheit der Sitzeinheit eine Liegefläche ausbildet. Insbesondere ist die Bankeinheitenoberfläche in der Sitzstellung zumindest im Wesentlichen in einer von der Sitzbodeneinheit der Sitzeinheit aufgespannten Ebene angeordnet. Vorzugsweise bildet der Bankeinheitenteilbereich in der Sitzstellung, in der der Bankeinheitenteilbereich die Sitzeinheit bezüglich der Sitzeinheitenlängsrichtung nach hinten überragt, einen Teil der Bankeinheitenoberfläche aus. Insbesondere bildet der Bankeinheitenteilbereich in der Sitzstellung einen Teil der Liegefläche aus. Vorzugsweise ist der Bankeinheitenteilbereich in der Sitzstellung zumindest im Wesentlichen in der von der Sitzbodeneinheit der Sitzeinheit aufgespannten Ebene angeordnet. Unter der Wendung, dass die Bankeinheitenoberfläche in zumindest einer Sitzstellung "zumindest im Wesentlichen in einer von einer Sitzbodeneinheit der Sitzeinheit aufgespannten Ebene angeordnet" ist, soll insbesondere verstanden werden, dass ein Anteil von mehr als 70 %, vorzugsweise von mehr als 80 % und insbesondere von mehr als 90 % eines Betrags der Bankeinheitenoberfläche in der von der Sitzbodeneinheit der Sitzeinheit aufgespannten Ebene angeordnet ist. Durch eine erfindungsgemäße Ausgestaltung kann vorteilhaft eine große Liegefläche bereitgestellt werden, auf der sich ein auf dem Fahrzeugsitz sitzender Passagier angenehm und bequem hinlegen kann.

Zudem wird vorgeschlagen, dass die Liegefläche zumindest eine Liegeflächenlängsrichtung aufweist, die zu der Sitzeinheitenlängsrichtung geneigt ausgerichtet ist. Insbesondere liegt ein auf der Liegefläche liegender Passagier geneigt zu der Sitzeinheitenlängsrichtung, vorzugsweise zu der Sitzrichtung, insbesondere zu der Flugrichtung. Vorzugsweise liegt der auf der Liegefläche liegende Passagier geneigt über die Sitzbodeneinheit der Sitzeinheit. Insbesondere liegt der auf der Liegefläche liegende Passagier schräg über die Sitzbodeneinheit der Sitzeinheit. Unter der Wendung, dass die Liegeflächenlängsrichtung zu der Sitzeinheitenlängsrichtung "geneigt" ausgerichtet ist, soll insbesondere verstanden werden, dass sich die Liegeflächenlängsrichtung der Liegefläche und die Sitzeinheitenlängsrichtung der Sitzeinheit schneiden. Insbesondere schließen die Liegeflächenlängsrichtung der Liegefläche und die Sitzeinheitenlängsrichtung der Sitzeinheit einen kleinsten Winkel in einem Bereich von exklusive 0° bis inklusive 90° ein. Vorzugsweise schließen die Liegeflächenlängsrichtung der Liegefläche und die Sitzeinheitenlängsrichtung der Sitzeinheit einen kleinsten Winkel in einem Bereich von 15° bis 45º ein. Insbesondere schließen die Liegeflächenlängsrichtung der Liegefläche und die Sitzeinheitenlängsrichtung der Sitzeinheit einen kleinsten Winkel von zumindest im Wesentlichen 30° ein. Unter einem "kleinsten Winkel" soll insbesondere ein Winkel bei einem Schnitt zweier Geraden verstanden werden, der einen Betrag aufweist, der kleiner oder gleich einem Betrag eines größten Winkels bei dem Schnitt der beiden Geraden ist. Insbesondere beträgt eine Summe des kleinsten Winkels und des größten Winkels zumindest im Wesentlichen 180°. Unter "zumindest im Wesentlichen" soll in diesem Zusammenhang insbesondere verstanden werden, dass eine Abweichung von einem vorgegebenen Wert insbesondere weniger als 25 %, vorzugsweise weniger als 10 % und besonders bevorzugt weniger als 5 % des vorgegebenen Werts abweicht. Durch eine erfindungsgemäße Ausgestaltung kann vorteilhaft ein zu einer Verfügung stehender Platz, insbesondere ein in einer Passagierkabine zu einer Verfügung stehender Platz, optimal ausgenutzt werden. Insbesondere kann in dem zur Verfügung stehenden Platz eine maximal mögliche Liegefläche für einen Passagier, insbesondere selbst bei einer engen Bestuhlung in der Passagierkabine, in welcher der Fahrzeugsitz angeordnet ist, bereitgestellt werden.

Weiterhin wird vorgeschlagen, dass die Bankeinheit zumindest zwei differierende Bankeinheitenquererstreckungen aufweist. Insbesondere weist die Bankeinheit bezüglich einer Bankeinheitenquerrichtung zumindest zwei differierende Bankeinheitenquererstreckungen auf. Vorzugsweise weist die Bankeinheit in einem bezüglich einer Bankeinheitenlängsrichtung hinteren Teilbereich, insbesondere in dem Bankeinheitenteilbereich, eine der Bankeinheitenquererstreckungen und in einem in der Bankeinheitenlängsrichtung versetzt angeordneten weiteren Teilbereich der Bankeinheit eine weitere der Bankeinheitenquererstreckungen auf. Insbesondere ist die weitere Bankeinheitenquererstreckung kleiner als die Bankeinheitenquererstreckung. Vorzugsweise ist die weitere Bankeinheitenquererstreckung um mehr als einen Faktor zwei kleiner als die Bankeinheitenquererstreckung. Insbesondere ist die weitere Bankeinheitenquererstreckung um mehr als einen Faktor drei kleiner als die Bankeinheitenquererstreckung. Vorzugsweise ist die weitere Bankeinheitenquererstreckung um mehr als einen Faktor vier kleiner als die Bankeinheitenquererstreckung. Unter einer "Bankeinheitenlängsrichtung" soll insbesondere eine zumindest im Wesentlichen parallel zu einer Bankeinheitenlängserstreckung ausgerichtete Richtung verstanden werden. Unter einer "Bankeinheitenquerrichtung" soll insbesondere eine zumindest im Wesentlichen parallel zu einer Bankeinheitenquererstreckung ausgerichtete Richtung verstanden werden. Unter einer "Bankeinheitenlängserstreckung" soll insbesondere eine Erstreckung verstanden werden, die bei einer Projektion der Bankeinheitenoberfläche in eine Ebene einen maximalen Wert annimmt. Insbesondere ist ein Betrag der Bankeinheitenlängserstreckung größer oder gleich einem Betrag der Bankeinheitenquererstreckung. Unter einer "Bankeinheitenquererstreckung" soll insbesondere eine Erstreckung verstanden werden, die bei der Projektion der Bankeinheitenoberfläche in die Ebene einen Betrag kleiner oder gleich des Betrags der Bankeinheitenlängserstreckung annimmt. Durch eine erfindungsgemäße Ausgestaltung kann vorteilhaft ein auf Bedürfnisse eines den Fahrzeugsitz benutzenden Passagiers angepasster, komfortabler und bequemer Fahrzeugsitz erreicht werden.

Ferner wird vorgeschlagen, dass die Bankeinheit einen ausgehend von dem Bankeinheitenteilbereich der Bankeinheit bezüglich einer Bankeinheitenlängsrichtung sich verjüngenden Verlauf aufweist. Insbesondere weist die Bankeinheit in der Bankeinheitenlängsrichtung einen sich verjüngenden Bankeinheitenabschnitt auf, dessen Bankeinheitenquererstreckung ausgehend von der Bankeinheitenquererstreckung in dem Bankeinheitenteilbereich, insbesondere dem hinteren Teilbereich, bis hin zu der weiteren Bankeinheitenquererstreckung in dem weiteren Teilbereich kontinuierlich abnimmt. Vorzugsweise weist der Bankeinheitenteilbereich der Bankeinheit eine Bankeinheitenquererstreckung mit einem Betrag auf, der größer ist als ein Betrag einer Bankeinheitenquererstreckung der Bankeinheit in dem weiteren Teilbereich der Bankeinheit. Durch eine erfindungsgemäße Ausgestaltung kann vorteilhaft ein sich verjüngender Verlauf der Bankeinheitenquererstreckung erreicht werden, wodurch eine bezüglich der Bankeinheitenquerrichtung angenehm an eine Körpergeometrie eines auf der Bankeinheit liegenden Passagiers anpasste Bankeinheit erreicht werden kann. Dadurch kann eine komfortable Liegefläche bereitgestellt werden.

Zudem wird vorgeschlagen, dass die Bankeinheit zumindest eine Bankeinheitenlängserstreckung aufweist, die zu der Sitzeinheitenlängsrichtung geneigt ausgerichtet ist. Insbesondere weist die Bankeinheit zumindest eine Bankeinheitenlängsrichtung auf, die zu der Sitzeinheitenlängsrichtung geneigt ausgerichtet ist. Vorzugsweise ist die Bankeinheitenlängsrichtung zumindest im Wesentlichen parallel zu der Bankeinheitenlängserstreckung ausgerichtet. Unter der Wendung, dass die Bankeinheitenlängsrichtung zu der Sitzeinheitenlängsrichtung "geneigt" ausgerichtet ist, soll insbesondere verstanden werden, dass sich die Bankeinheitenlängsrichtung der Bankeinheit und die Sitzeinheitenlängsrichtung der Sitzeinheit schneiden. Insbesondere schließen die Bankeinheitenlängsrichtung der Bankeinheit und die Sitzeinheitenlängsrichtung der Sitzeinheit einen Winkel in einem Bereich von exklusive 0° bis inklusive 90° ein. Vorzugsweise schließen die Bankeinheitenlängsrichtung der Bankeinheit und die Sitzeinheitenlängsrichtung der Sitzeinheit einen Winkel in einem Bereich von 15° bis 55° ein. Durcheine erfindungsgemäße geneigte Anordnung der Bankeinheit relativ zu der Sitzeinheit kann vorteilhaft der Fahrzeugsitz flexibel an örtliche Gegebenheiten, an welchen der Fahrzeugsitz aufgeständert werden soll, angepasst werden. Ferner kann vorteilhaft eine bezüglich eines Komforts für einen Passagier verbesserte Anordnung der Bankeinheit relativ zu der Sitzeinheit ermöglicht werden, wodurch der Komfort für den Passagier erhöht werden kann.

Weiterhin wird vorgeschlagen, dass die Sitzeinheit zumindest eine Unterschenkelstützeinheit und die zumindest eine Sitzbodeneinheit aufweist, die in zumindest einer Sitzstellung zumindest im Wesentlichen in einer Ebene angeordnet sind. Unter der Wendung, dass die Unterschenkelstützeinheit und die Sitzbodeneinheit in zumindest einer Sitzstellung "zumindest im Wesentlichen in einer Ebene angeordnet" sind, soll insbesondere verstanden werden, dass die Unterschenkelstützeinheit eine Unterschenkelstützeinheitenoberfläche aufweist, die zu mehr als 70 %, vorzugsweise zu mehr als 80 % und insbesondere zu mehr als 90 % eines Betrags der Unterschenkelstützeinheitenoberfläche in einer von der Sitzbodeneinheit aufgespannten Ebene angeordnet ist. Durch eine erfindungsgemäße Ausgestaltung kann vorteilhaft in der Sitzstellung ein auf der Sitzbodeneinheit der Sitzeinheit sitzender Passagier seine Beine bequem ausgestreckt auf der Unterschenkelstützeinheit der Sitzeinheit ablegen.

Ferner wird vorgeschlagen, dass die Unterschenkelstützeinheit und die Sitzbodeneinheit in der Sitzstellung mit der Bankeinheitenoberfläche die Liegefläche ausbilden. Insbesondere liegt der auf der Liegefläche liegende Passagier geneigt über die Sitzbodeneinheit der Sitzeinheit. Vorzugsweise liegt der auf der Liegefläche liegende Passagier schräg über die Sitzbodeneinheit der Sitzeinheit. Vorzugsweise liegt der auf der Liegefläche liegende Passagier geneigt über die Unterschenkelstützeinheit der Sitzeinheit. Insbesondere liegt der auf der Liegefläche liegende Passagier schräg über die Unterschenkelstützeinheit der Sitzeinheit. Insbesondere liegt der auf der Liegefläche liegende Passagier geneigt über die Sitzbodeneinheit und die Unterschenkelstützeinheit der Sitzeinheit. Vorzugsweise liegt der auf der Liegefläche liegende Passagier schräg über die Sitzbodeneinheit und die Unterschenkelstützeinheit der Sitzeinheit. Durch eine erfindungsgemäße Ausgestaltung kann vorteilhaft eine angenehm große Liegefläche bereitgestellt und damit dem auf der Liegefläche liegenden Passagier ein größtmöglicher Liegekomfort ermöglicht werden.

Zudem wird vorgeschlagen, dass die Bankeinheit in zumindest einer Sitzstellung zumindest einen Bankeinheitenteilbereich aufweist, der bezüglich der Sitzeinheitenlängsrichtung vor der Sitzeinheit angeordnet ist. Insbesondere schneidet eine zumindest im Wesentlichen parallel zu der Sitzeinheitenlängsrichtung, insbesondere zu der Sitzrichtung, ausgerichtete Gerade ausgehend von einem Mittelpunkt der Sitzbodeneinheit der Sitzeinheit und bei Fortschreiten in der Sitzeinheitenlängsrichtung zunächst einen der Rückenlehneneinheit abgewandt angeordneten Seitenbereich der Sitzeinheit und bei weiterem Fortschreiten in der Sitzrichtung den Bankeinheitenteilbereich der Bankeinheit. Vorzugsweise ist der Bankeinheitenteilbereich der Bankeinheit in der Sitzstellung ausgehend von der Sitzbodeneinheit der Sitzeinheit bezüglich der Sitzeinheitenlängsrichtung vor der Sitzeinheit angeordnet. Insbesondere ist der Bankeinheitenteilbereich der Bankeinheit in der Sitzstellung ausgehend von einem auf der Sitzeinheit, insbesondere auf der Sitzbodeneinheit der Sitzeinheit, sitzenden Passagier bezüglich der Sitzeinheitenlängsrichtung vor der Sitzeinheit angeordnet. Durch eine erfindungsgemäße Ausgestaltung kann vorteilhaft ein auf der Sitzeinheit sitzender Passagier seine Beine bequem auf dem bezüglich der Sitzeinheitenlängsrichtung vor der Sitzeinheit angeordneten Bankeinheitenteilbereich der Bankeinheit ablegen.

Zudem wird vorgeschlagen, dass die Sitzvorrichtung zumindest eine Trennwand aufweist, die in zumindest einer Querschnittsebene eine zumindest im Wesentlichen wellenförmige Kontur aufweist. Alternativ ist denkbar, dass die Trennwand eine zumindest im Wesentlichen gerade, insbesondere zumindest im Wesentlichen als eine Gerade ausgebildete, Kontur aufweist. Insbesondere ist die Trennwand in einer Verlängerung der Rückenlehneneinheit angeordnet. Unter einer "Trennwand" soll insbesondere eine Wand verstanden werden, die dazu vorgesehen ist, in zumindest einem montierten Zustand eine Abschirmung, insbesondere eine Abschirmung gegenüber weiteren Fahrzeugsitzen, zu ermöglichen. Insbesondere ist die Trennwand dazu vorgesehen, einen einem Passagier zu einer Verfügung stehenden Bereich abzugrenzen. Vorzugsweise ist die Trennwand dazu vorgesehen, eine Privatsphäre des den Fahrzeugsitz benutzenden Passagiers, insbesondere vor Blicken von weiteren, dem Fahrzeugsitz benachbarten Fahrzeugsitzen benutzenden Passagieren, zu schützen. Unter einer "wellenförmigen Kontur" soll insbesondere eine Kontur verstanden werden, die durch eine mathematische Sinusfunktion gemäß f(x) = a sin(bx) beschreibbar ist. Insbesondere ändert der Faktor a eine Amplitude der mathematischen Sinusfunktion. Vorzugsweise ändert der Faktor b eine Periodenlänge, insbesondere eine Frequenz, der mathematischen Sinusfunktion. Insbesondere sind die Faktoren a und b reelle Zahlen größer Null. Unter einer "zumindest im Wesentlichen wellenförmigen Kontur" soll insbesondere eine Kontur verstanden werden, die von der mathematischen Sinusfunktion f(x) = a sin(bx) in einer zumindest im Wesentlichen parallel zu einer Amplitude der mathematischen Sinusfunktion f(x) = a sin(bx) ausgerichteten Richtung um weniger als 10%, vorzugsweise um weniger als 7 % und insbesondere um weniger als 5 % eines Betrags der Amplitude von 2a der mathematischen Sinusfunktion f(x) = a sin(bx) abweicht und die von der mathematischen Sinusfunktion f(x) = a sin(bx) in einer zumindest im Wesentlichen parallel zu einer Periodenlänge der mathematischen Sinusfunktion f(x) = a sin(bx) ausgerichteten Richtung um weniger als 10%, vorzugsweise um weniger als 7 % und insbesondere um weniger als 5 % eines Betrags der Periodenlänge von 2π/b der mathematischen Sinusfunktion f(x) = a sin(bx) abweicht. Durch eine erfindungsgemäße Ausgestaltung kann vorteilhaft ein Bereich des Fahrzeugsitzes abschirmt werden, wodurch eine Privatsphäre eines den Fahrzeugsitz benutzenden Passagiers einfach und sicher geschützt werden kann.

Weiterhin wird ein System mit zumindest einem erfindungsgemäßen Fahrzeugsitz und mit zumindest einem bezüglich der Sitzeinheitenlängsrichtung hinter dem Fahrzeugsitz angeordneten weiteren Sitz, insbesondere mit zumindest einem bezüglich der Sitzeinheitenlängsrichtung hinter dem Fahrzeugsitz angeordneten weiteren erfindungsgemäßen Fahrzeugsitz, vorgeschlagen. Insbesondere ist der weitere Sitz als der weitere erfindungsgemäße Fahrzeugsitz ausgebildet. Durch eine erfindungsgemäße Ausgestaltung kann vorteilhaft ein komfortables System aus zumindest zwei, vorzugsweise mehreren, bezüglich der Sitzeinheitenlängsrichtung hintereinander angeordneten Fahrzeugsitzen bereitgestellt werden. Dadurch kann zumindest zweien, vorzugsweise mehreren, Passagieren eine komfortable Sitz- und/oder Liegegelegenheit bereitgestellt werden.

Ferner wird eine Passagierkabine, insbesondere eine Flugzeugpassagierkabine, mit zumindest einem erfindungsgemäßen Fahrzeugsitz vorgeschlagen. Der Fahrzeugsitz weist die Sitzvorrichtung auf, die dazu vorgesehen ist, in der Passagierkabine eingebaut zu werden. Insbesondere weist die Sitzvorrichtung zumindest einen Fittingkörper auf, der dazu vorgesehen ist, die Sitzvorrichtung in der Passagierkabine zu befestigen. Vorzugsweise weist die Passagierkabine zumindest eine Befestigungsschiene auf, die dazu vorgesehen ist, in einem eingebauten Zustand der Sitzvorrichtung den Fittingkörper zumindest teilweise aufzunehmen. Insbesondere ist die Befestigungsschiene zumindest im Wesentlichen fest in der Passagierkabine verankert. Vorzugsweise ist die Sitzvorrichtung dazu vorgesehen, mittels des Fittingkörpers in der Passagierkabine, insbesondere mittels der Befestigungsschiene, in der Passagierkabine eingebaut zu werden. Insbesondere ist die Befestigungsschiene zumindest im Wesentlichen parallel zu einer Passagierkabinenlängsrichtung der Passagierkabine ausgerichtet. Vorzugsweise weist der Fittingkörper eine Fittingkörperlängsrichtung auf, die zumindest im Wesentlichen parallel zu der Sitzeinheit, insbesondere zu einer Sitzbodeneinheit der Sitzeinheit, ausgerichtet ist. Insbesondere ist die Fittingkörperlängsrichtung zumindest im Wesentlichen parallel zu der Sitzeinheitenlängsrichtung, insbesondere zu einer Sitzbodeneinheitenlängsrichtung der Sitzbodeneinheit, ausgerichtet. Vorzugsweise ist die Fittingkörperlängsrichtung zumindest im Wesentlichen parallel zu der Passagierkabinenlängsrichtung ausgerichtet. Insbesondere ist die Fittingkörperlängsrichtung zumindest im Wesentlichen parallel zu zumindest einer Befestigungsschienenlängsrichtung der Befestigungsschiene ausgerichtet. Insbesondere ist die Sitzvorrichtung dazu vorgesehen, mit der zumindest im Wesentlichen parallel zu der Passagierkabinenlängsrichtung ausgerichteten Sitzeinheitenlängsrichtung in der Passagierkabine eingebaut zu werden. Insbesondere beträgt ein Winkel, insbesondere ein kleinster Winkel, zwischen der Sitzeinheitenlängsrichtung und der Passagierkabinenlängsrichtung zumindest im Wesentlichen 0°. Vorzugsweise schließt die Liegeflächenlängsrichtung mit der Passagierkabinenlängsrichtung einen Winkel, insbesondere einen kleinsten Winkel, von zumindest im Wesentlichen 30° ein. Unter "zumindest im Wesentlichen" soll in diesem Zusammenhang insbesondere verstanden werden, dass eine Abweichung von einem vorgegebenen Wert insbesondere weniger als 25 %, vorzugsweise weniger als 10 % und besonders bevorzugt weniger als 5 % des vorgegebenen Werts abweicht. Durch eine erfindungsgemäße Ausgestaltung kann vorteilhaft eine komfortable Passagierkabine erreicht werden. Ferner kann vorteilhaft erreicht werden, dass ein auf der Sitzvorrichtung sitzender Passagier unabhängig von einer Position der Sitzvorrichtung in der Passagierkabine einen direkten Zugang zu einem Passagierkabinengang hat.

Der erfindungsgemäße Fahrzeugsitz soll hierbei nicht auf die oben beschriebene Anwendung und Ausführungsform beschränkt sein. Insbesondere kann der erfindungsgemäße Fahrzeugsitz zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen erfindungsgemäßen Fahrzeugsitz in einer perspektivischen Darstellung,
- Fig. 2: eine erfindungsgemäße Passagierkabine mit einer Vielzahl an erfindungsgemäßen Fahrzeugsitzen gemäß Fig. 1 und
- Fig. 3: einen vergrößert dargestellten Ausschnitt aus Fig. 2.

### Beschreibung des Ausführungsbeispiels

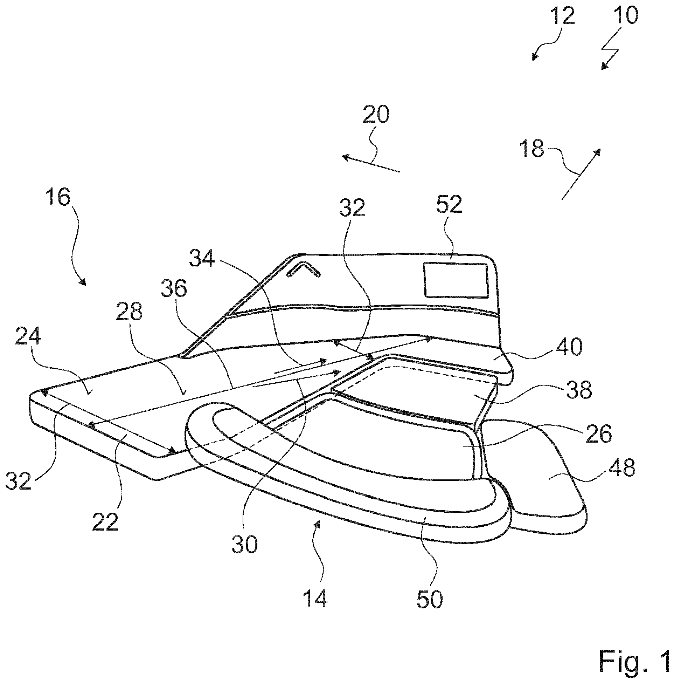

Fig. 1 zeigt in einer perspektivischen Darstellung einen erfindungsgemäßen Fahrzeugsitz 10 mit einer Sitzvorrichtung 12, die eine Sitzeinheit 14 und eine Bankeinheit 16 aufweist, die in einer im Wesentlichen senkrecht zu einer Sitzeinheitenlängsrichtung 18 ausgerichteten Querrichtung 20 an einer Seite der Sitzeinheit 14 angeordnet ist. Der Fahrzeugsitz 10 ist als ein Flugzeugsitz ausgebildet. Die Sitzeinheit 14 weist eine Sitzbodeneinheit 26 auf, die als eine Sitzfläche für einen auf der Sitzeinheit 14 sitzenden Passagier (nicht dargestellt) vorgesehen ist. Zudem weist die Sitzeinheit 14 eine Armlehneneinheit 48 auf, die an einer der einen Seite der Sitzeinheit 14 bezüglich der Querrichtung 20 abgewandten Seite der Sitzeinheit 14 angeordnet ist. Und zwar ist die Armlehneneinheit 48 an einer der Bankeinheit 16 bezüglich der Querrichtung 20 abgewandten Seite der Sitzeinheit 14 angeordnet. Die Sitzeinheit 14 umfasst eine Unterschenkelstützeinheit 38, welche schwenkbar an der Sitzbodeneinheit 26 gelagert ist. Die Unterschenkelstützeinheit 38 weist eine Anlagefläche für Unterschenkel (nicht dargestellt) des Passagiers auf. Die Sitzeinheit 14 weist die Unterschenkelstützeinheit 38 und die Sitzbodeneinheit 26 auf, die in einer Sitzstellung im Wesentlichen in einer Ebene angeordnet sind. In Fig. 1 ist die Sitzstellung, in der die Unterschenkelstützeinheit 38 und die Sitzbodeneinheit 26 im Wesentlichen in der Ebene angeordnet sind, dargestellt. In der in Fig. 1 dargestellten Sitzstellung ist der Fahrzeugsitz 10 in einer Komfortstellung angeordnet. Die in Fig. 1 gezeigte Komfortstellung wird im Folgenden als die Sitzstellung bezeichnet.

Die Sitzeinheit 14 weist eine Rückenlehneneinheit 50 auf, die schwenkbar an der Sitzbodeneinheit 26 gelagert ist. Die Rückenlehneneinheit 50 und die Unterschenkelstützeinheit 38 sind an einander abweisenden Seiten der Sitzeinheit 14 an der Sitzeinheit 14 gelagert. Die Sitzvorrichtung 12 weist eine Trennwand 52 auf, die in einer Querschnittsebene eine im Wesentlichen wellenförmige Kontur aufweist. Die Trennwand 52 ist dazu vorgesehen, eine Abschirmung gegenüber weiteren Fahrzeugsitzen 10 zu ermöglichen. Und zwar ist die Trennwand 52 dazu vorgesehen, einen dem Passagier zu einer Verfügung stehenden Bereich abzugrenzen. Die Trennwand 52 ist bezüglich der Sitzeinheitenlängsrichtung 18 vor der Sitzeinheit 14 angeordnet. Die Sitzvorrichtung 12 weist einen Monitor auf, der dazu vorgesehen ist, ein Unterhaltungsprogramm darzustellen. Der Monitor ist zudem dazu vorgesehen, eine Bordinformation darzustellen. Der Monitor ist an der Trennwand 52 angeordnet. Die Sitzvorrichtung 12 weist einen Kleiderhaken auf, an welchem der Passagier seine Kleidung anhängen kann. Der Kleiderhaken ist an der Trennwand 52 angeordnet. Die Sitzvorrichtung 12 weist zudem Stauräume (nicht dargestellt) für Unterlagen und/oder Gepäck des Passagiers auf. Beispielsweise ist denkbar, dass die Stauräume unterhalb der Bankeinheit 16 angeordnet sind.

Die Bankeinheit 16 weist in der Sitzstellung einen Bankeinheitenteilbereich 22 auf, der die Sitzeinheit 14 bezüglich der Sitzeinheitenlängsrichtung 18 nach hinten überragt. Die Bankeinheit 16 weist in dem Bankeinheitenteilbereich 22 eine Bankeinheitenquererstreckung 32 auf, die geneigt zu der Querrichtung 20 ausgerichtet ist. Der Bankeinheitenteilbereich 22 überragt die Sitzeinheit 14 auf einer der Trennwand 52 abweisenden Seite der Sitzeinheit 14. Und zwar überragt der Bankeinheitenteilbereich 22 die Sitzeinheit 14 an der Seite der Sitzeinheit 14, an welcher die Rückenlehneneinheit 50 an der Sitzeinheit 14 gelagert ist. Ausgehend von dem Bankeinheitenteilbereich 22 weist die Bankeinheitenquererstreckung 32 bezüglich einer Bankeinheitenlängsrichtung 34 einen sich verjüngenden Verlauf auf. Die Bankeinheit 16 weist den ausgehend von dem Bankeinheitenteilbereich 22 der Bankeinheit 16 bezüglich der Bankeinheitenlängsrichtung 34 sich verjüngenden Verlauf auf. Ein Betrag der Bankeinheitenquererstreckung 32 nimmt in der Bankeinheitenlängsrichtung 34 betrachtet kontinuierlich ab. Die Bankeinheit 16 weist mehrere differierende Bankeinheitenquererstreckungen 32 auf.

Wie bereits oben erwähnt, ist die Trennwand 52 bezüglich der Sitzeinheitenlängsrichtung 18 vor der Sitzeinheit 14 angeordnet. Ausgehend von der Sitzbodeneinheit 26 der Sitzeinheit 14 ist die Trennwand 52 bei Fortschreiten in der Sitzeinheitenlängsrichtung 18 vor der Sitzeinheit 14 angeordnet. Der auf der Sitzbodeneinheit 26 sitzende Passagier blickt bei Blickrichtung in der Sitzeinheitenlängsrichtung 18 auf die Trennwand 52. Zwischen der Trennwand 52 und der Sitzbodeneinheit 26 der Sitzeinheit 14 ist ein Bankeinheitenteilbereich 40 angeordnet. Der auf der Sitzbodeneinheit 26 sitzende Passagier blickt bei Blickrichtung in der Sitzeinheitenlängsrichtung 18 auf den Bankeinheitenteilbereich 40. Ausgehend von der Sitzbodeneinheit 26 der Sitzeinheit 14 ist der Bankeinheitenteilbereich 40 bei Fortschreiten in der Sitzeinheitenlängsrichtung 18 vor der Sitzeinheit 14 angeordnet. Zudem ist der Bankeinheitenteilbereich 40 ausgehend von der Sitzbodeneinheit 26 der Sitzeinheit 14 bei Fortschreiten in der Sitzeinheitenlängsrichtung 18 vor der Trennwand 52 angeordnet. Die Bankeinheit 16 weist in der Sitzstellung den Bankeinheitenteilbereich 40 auf, der ausgehend von der Sitzeinheit 14 bezüglich der Sitzeinheitenlängsrichtung 18 vor der Sitzeinheit 14 angeordnet ist.

Die Sitzeinheitenlängsrichtung 18 ist im Wesentlichen parallel zu einer Sitzrichtung ausgerichtet. Zudem ist die Sitzeinheitenlängsrichtung 18 im Wesentlichen parallel zu einer Flugrichtung ausgerichtet. Die Bankeinheit 16 weist eine Bankeinheitenlängserstreckung 36 auf, die zu der Sitzeinheitenlängsrichtung 18 geneigt ausgerichtet ist. Die Bankeinheitenlängserstreckung 36 erstreckt sich ausgehend von dem die Sitzeinheit 14 bezüglich der Sitzeinheitenlängsrichtung 18 nach hinten überragenden Bankeinheitenteilbereich 22 bis hin zu dem bezüglich der Sitzeinheitenlängsrichtung 18 vor der Sitzeinheit 14 angeordneten Bankeinheitenteilbereich 40. Die Bankeinheit 16 grenzt in einem Bereich direkt an die Trennwand 52 an. Und zwar grenzt die Bankeinheit 16 in einem bezüglich der Sitzeinheitenlängsrichtung 18 vorderen Bereich der Bankeinheit 16 an die Trennwand 52 an.

Die Bankeinheit 16 grenzt in einem bezüglich der Bankeinheitenlängsrichtung 34 vorderen Bereich der Bankeinheit 16 an die Trennwand 52 an.

Die Bankeinheit 16 weist eine Bankeinheitenoberfläche 24 auf, die in der Sitzstellung mit der Sitzbodeneinheit 26 der Sitzeinheit 14 eine Liegefläche 28 ausbildet. Die Bankeinheitenoberfläche 24 ist im Wesentlichen in einer von der Sitzbodeneinheit 26 aufgespannten Ebene angeordnet. Dadurch ist ein Wechsel des Passagiers aus einer auf der Sitzeinheit 14 sitzenden Position in eine auf der Bankeinheit 16 liegende Position problemlos möglich. Wie bereits eingangs erwähnt, ist die Unterschenkelstützeinheit 38 schwenkbar an der Sitzbodeneinheit 26 der Sitzeinheit 14 gelagert. Die Unterschenkelstützeinheit 38 ist in eine Stellung schwenkbar, in der die Unterschenkelstützeinheit 38 in der von der Sitzbodeneinheit 26 aufgespannten Ebene angeordnet ist. Die Unterschenkelstützeinheit 38 und die Sitzbodeneinheit 26 bilden in der Sitzstellung mit der Bankeinheitenoberfläche 24 die Liegefläche 28 aus. Die Liegefläche 28 erstreckt sich ausgehend von dem Bankeinheitenteilbereich 22 schräg über die Sitzeinheit 14. Und zwar erstreckt sich die Liegefläche 28 ausgehend von dem Bankeinheitenteilbereich 22 schräg über die Sitzbodeneinheit 26 und die Unterschenkelstützeinheit 38. Die Liegefläche 28 weist eine Liegeflächenlängsrichtung 30 auf, die zu der Sitzeinheitenlängsrichtung 18 geneigt ausgerichtet ist. Im vorliegenden Ausführungsbeispiel schließt die Liegeflächenlängsrichtung 30 mit der Sitzeinheitenlängsrichtung 18 einen Winkel von im Wesentlichen 30° eh. Ein auf der Liegefläche 28 liegender Passagier liegt schräg zu der Sitzeinheitenlängsrichtung 18. Und zwar liegt der auf der Liegefläche 28 liegende Passagier schräg zu der Flugrichtung.

Der Fahrzeugsitz 10 ist dazu vorgesehen, in eine Passagierkabine 46 eingebaut zu werden. Der Fahrzeugsitz 10 weist die Sitzvorrichtung 12 auf. Die Sitzvorrichtung 12 ist dazu vorgesehen, mit der im Wesentlichen parallel zu einer Passagierkabinenlängsrichtung 62 ausgerichteten Sitzeinheitenlängsrichtung 18 in der Passagierkabine 46 eingebaut zu werden. Die Liegeflächenlängsrichtung 30 ist geneigt zu der Passagierkabinenlängsrichtung 62 ausgerichtet. Die Liegeflächenlängsrichtung 30 schließt mit der Passagierkabinenlängsrichtung 62 einen Winkel von im Wesentlichen 30° ein.

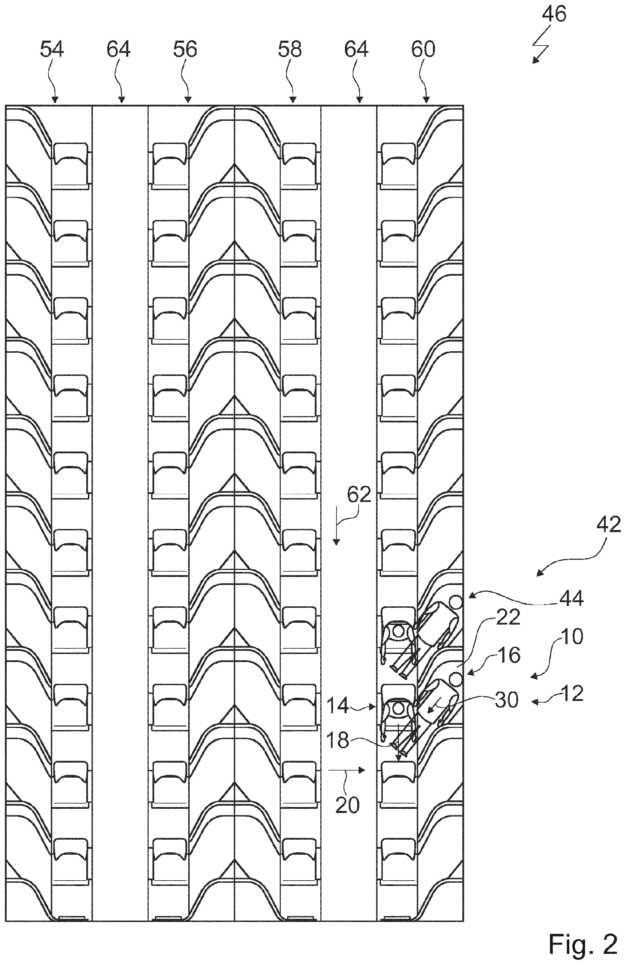

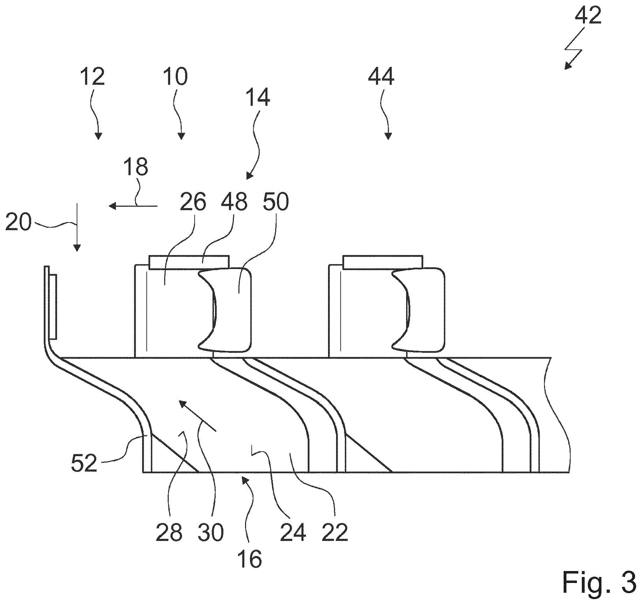

Fig. 2 zeigt die erfindungsgemäße Passagierkabine 46, und zwar eine Flugzeugpassagierkabine, mit einer Vielzahl an erfindungsgemäßen Fahrzeugsitzen 10. Die Passagierkabine 46 ist als die Flugzeugpassagierkabine ausgebildet. Der Übersichtlichkeit halber ist in Fig. 2 und 3 lediglich einer der Fahrzeugsitze 10 mit Bezugszeichen versehen. Zudem wurde der Übersichtlichkeit halber in Fig. 2 und 3 auf eine detaillierte Darstellung der Fahrzeugsitze 10 gemäß Fig. 1 verzichtet und die Fahrzeugsitze 10 lediglich schematisch dargestellt, weshalb einige Merkmale des in Fig. 1 gezeigten Fahrzeugsitzes 10 fehlen. Fig. 2 zeigt, dass die Fahrzeugsitze 10 in vier Passagierkabinenreihen 54, 56, 58, 60 angeordnet sind. Die jeweiligen Passagierkabinenreihen 54, 56, 58, 60 sind jeweils parallel zu der Passagierkabinenlängsrichtung 62 ausgerichtet. Dabei sind zwei der Passagierkabinenreihen 54, 60 jeweils an einem, bezüglich einer senkrecht zu der Passagierkabinenlängsrichtung 62 ausgerichteten Passagierkabinenquerrichtung betrachtet, Rand der Passagierkabine 46 angeordnet. Die Passagierkabinenreihen 56, 58 sind in einer Mitte der Passagierkabine 46 angeordnet. Die Passagierkabinenreihen 56, 58 sind von den jeweiligen Passagierkabinenreihen 54, 60 jeweils durch einen Passagierkabinengang 64 getrennt. Der jeweilige Passagierkabinengang 64 ist parallel zu der Passagierkabinenlängsrichtung 62 ausgerichtet. Die Passagierkabinenlängsrichtung 62 ist parallel zu der Flugrichtung ausgerichtet. Die Passagierkabinenquerrichtung ist parallel zu der Querrichtung 20 ausgerichtet.

Fig. 2 zeigt eine als 40 PAX bezeichnete Passagierkabinenbestuhlung. Bei der als 40 PAX bezeichneten Passagierkabinenbestuhlung sind insgesamt 40 Fahrzeugsitze 10 in der Passagierkabine 46 angeordnet. Somit sind insgesamt zehn Fahrzeugsitze 10 in einer jeweiligen der vier Passagierkabinenreihen 54, 56, 58, 60 angeordnet. Die jeweilige Sitzvorrichtung 12 des jeweiligen Fahrzeugsitzes 10 ist mit jeweils im Wesentlichen parallel zu der Passagierkabinenlängsrichtung 62 ausgerichteter Sitzeinheitenlängsrichtung 18 in der Passagierkabine 46 eingebaut. Die jeweilige Sitzeinheitenlängsrichtung 18 der jeweiligen Sitzeinheit 14 ist jeweils im Wesentlichen parallel zu der Passagierkabinenlängsrichtung 62 ausgerichtet. Die jeweilige Sitzeinheitenlängsrichtung 18 der jeweiligen Sitzeinheit 14 schließt mit der Passagierkabinenlängsrichtung 62 jeweils einen kleinsten Winkel von 0° ein. Die jeweilige Liegeflächenlängsrichtung 30schließt mit der Passagierkabinenlängsrichtung 62 jeweils einen kleinsten Winkel von 30° ein. Ein jeweiliger Abstand zweier bezüglich der Passagierkabinenlängsrichtung 62 hintereinander angeordneter Fahrzeugsitze 10 beträgt in der als 40 PAX bezeichneten Passagierkabinenbestuhlung jeweils etwa 107 cm. Die jeweiligen Winkel und Abstände sind variierbar und können je nach Bedürfnissen und Gegebenheiten einer jeweiligen Passagierkabine variiert werden. Dabei sind einem Fachmann als sinnvoll erscheinende Kombinationen denkbar.

Alternativ zu der als 40 PAX bezeichneten Passagierkabinenbestuhlung sind weitere Passagierkabinenbestuhlungen denkbar. In jeder der Passagierkabinenbestuhlungen sind die oben beschriebenen Winkel zwischen der jeweiligen Sitzeinheitenlängsrichtung 18 und der Passagierkabinenlängsrichtung 62 sowie zwischen der jeweiligen Liegeflächenlängsrichtung 30 und der Passagierkabinenlängsrichtung 62 gleich wie in der als 40 PAX bezeichneten Passagierkabinenbestuhlung. Die jeweiligen Abstände zwischen den jeweiligen Fahrzeugsitzen 10 variieren jedoch je nach Passagierkabinenbestuhlung. Dadurch ist vorteilhaft eine beliebige Dichte an Fahrzeugsitzen 10 in der Passagierkabine 46 realisierbar. In einer als 44 PAX bezeichneten Passagierkabinenbestuhlung beträgt ein jeweiliger Abstand zweier bezüglich der Passagierkabinenlängsrichtung 62 hintereinander angeordneter Fahrzeugsitze 10 jeweils etwa 97 cm. In der als 44 PAX bezeichneten Passagierkabinenbestuhlung sind insgesamt 44 Fahrzeugsitze 10 in der Passagierkabine 46 angeordnet. Somit sind insgesamt elf Fahrzeugsitze 10 in einer jeweiligen der vier Passagierkabinenreihen 54, 56, 58, 60 angeordnet.

In einer als 32 PAX bezeichneten Passagierkabinenbestuhlung beträgt ein jeweiliger Abstand zweier bezüglich der Passagierkabinenlängsrichtung 62 hintereinander angeordneter Fahrzeugsitze 10 jeweils etwa 135 cm. In der als 32 PAX bezeichneten Passagierkabinenbestuhlung sind insgesamt 32 Fahrzeugsitze 10 in der Passagierkabine 46 angeordnet. Somit sind insgesamt acht Fahrzeugsitze 10 in einer jeweiligen der vier Passagierkabinenreihen 54, 56, 58, 60 angeordnet. In einer als 36 PAX bezeichneten Passagierkabinenbestuhlung beträgt ein jeweiliger Abstand zweier bezüglich der Passagierkabinenlängsrichtung 62 hintereinander angeordneter Fahrzeugsitze 10 jeweils etwa 120 cm. In der als 36 PAX bezeichneten Passagierkabinenbestuhlung sind insgesamt 36 Fahrzeugsitze 10 in der Passagierkabine 46 angeordnet. Somit sind insgesamt neun Fahrzeugsitze 10 in einer jeweiligen der vier Passagierkabinenreihen 54, 56, 58, 60 angeordnet.

Fig. 3 zeigt einen vergrößert dargestellten Ausschnitt aus Fig. 2. Der vergrößert dargestellte Ausschnitt aus Fig. 2 ist somit als ein Ausschnitt aus der als 40 PAX bezeichneten Passagierkabinenbestuhlung ausgebildet. Zudem zeigt Fig. 3 ein erfindungsgemäßes System 42 mit dem erfindungsgemäßen Fahrzeugsitz 10 und mit einem bezüglich der Sitzeinheitenlängsrichtung 18 hinter dem Fahrzeugsitz 10 angeordneten weiteren Sitz 44, und zwar mit einem bezüglich der Sitzeinheitenlängsrichtung 18 hinter dem Fahrzeugsitz 10 angeordneten weiteren erfindungsgemäßen Fahrzeugsitz 10. Der weitere Sitz 44 ist als ein weiterer Fahrzeugsitz 10 ausgebildet.

Fig. 3 zeigt deutlich, dass - wie bereits erwähnt - die jeweilige Sitzvorrichtung 12 jeweils die Trennwand 52 aufweist, die in jeweils einer Querschnittsebene jeweils eine wellenförmige Kontur aufweist. Ebenfalls erkennbar ist, dass die Trennwand 52 einen dem die Sitzvorrichtung 12 benutzenden Passagier zu einer Verfügung stehenden Raum abschirmt. Die Trennwand 52 bildet den dem die Sitzvorrichtung 12 benutzenden Passagier zu der Verfügung stehenden Raum teilweise aus. Fig. 3 zeigt zudem deutlich eine geneigte Ausrichtung der Sitzeinheitenlängsrichtung 18 und der Liegeflächenlängsrichtung 30 relativ zueinander.

Es ist denkbar, dass die Sitzeinheit 14 in eine Sitzstellung bringbar ist, in welcher die Sitzeinheit 14 bei Betrachtung in einer Seitenansicht einen im Wesentlichen Z-förmigen Verlauf aufweist. Und zwar ist denkbar, dass der Z-förmige Verlauf durch den auf der Sitzvorrichtung 12 sitzenden Passagier einstellbar ist. Dieser Z-förmige Verlauf ist als Lazy-Z-Stellung bezeichnet. Es ist denkbar, dass die als Lazy-Z-Stellung bezeichnete Sitzstellung durch die schwenkbar ausgebildete Sitzeinheit 14 einstellbar ist. Und zwar ist denkbar, dass die als Lazy-Z-Stellung bezeichnete Sitzstellung durch eine kombinierte Schwenkbewegung der Sitzbodeneinheit 26, der Unterschenkelstützeinheit 38 sowie der Rückenlehneneinheit 50 einstellbar ist. Dabei ist denkbar, dass der Z-förmige Verlauf durch den auf der Sitzvorrichtung 12 sitzenden Passagier einstellbar ist.

### Bezugszeichen

- 10: Fahrzeugsitz
- 12: Sitzvorrichtung
- 14: Sitzeinheit
- 16: Bankeinheit
- 18: Sitzeinheitenlängsrichtung
- 20: Querrichtung
- 22: Bankeinheitenteilbereich
- 24: Bankeinheitenoberfläche
- 26: Sitzbodeneinheit
- 28: Liegefläche
- 30: Liegeflächenlängsrichtung
- 32: Bankeinheitenquererstreckung
- 34: Bankeinheitenlängsrichtung
- 36: Bankeinheitenlängserstreckung
- 38: Unterschenkelstützeinheit
- 40: Bankeinheitenteilbereich
- 42: System
- 44: Weiterer Sitz
- 46: Passagierkabine
- 48: Armlehneneinheit
- 50: Rückenlehneneinheit
- 52: Trennwand
- 54: Passagierkabinenreihe
- 56: Passagierkabinenreihe
- 58: Passagierkabinenreihe
- 60: Passagierkabinenreihe
- 62: Passagierkabinenlängsrichtung
- 64: Passagierkabinengang

## Patentansprüche

1. Fahrzeugsitz, insbesondere Flugzeugsitz, mit zumindest einer Sitzvorrichtung (12), die zumindest eine Sitzeinheit (14), die zumindest eine Sitzbodeneinheit (26), die als eine Sitzfläche für einen auf der Sitzeinheit (14) sitzenden Passagier vorgesehen ist, und eine Rückenlehneneinheit (50) aufweist, die schwenkbar an der Sitzbodeneinheit (26) gelagert ist, und zumindest eine Bankeinheit (16) aufweist, die zumindest eine Bankeinheitenoberfläche (24) aufweist, wobei die Bankeinheitenoberfläche (24) als eine Liegefläche ausgebildet ist, wobei die Bankeinheit (16) in einer zumindest im Wesentlichen senkrecht zu der Sitzeinheitenlängsrichtung (18) ausgerichteten Querrichtung (20) an einer Seite der Sitzeinheit (14) angeordnet ist, wobei
die Bankeinheit (16) in zumindest einer Sitzstellung zumindest einen Bankeinheitenteilbereich (22) aufweist, der die Sitzeinheit (14) bezüglich der Sitzeinheitenlängsrichtung (18) nach hinten überragt **dadurch gekennzeichnet, dass**
die Bankeinheitenoberfläche (24) der Bankeinheit (16) in zumindest einer Sitzstellung mit zumindest der Sitzbodeneinheit (26) der Sitzeinheit (14) eine Liegefläche (28) für einen Passagier ausbildet.

2. Fahrzeugsitz nach Anspruch 1,
**dadurch gekennzeichnet, dass**
die Liegefläche (28) zumindest eine Liegeflächenlängsrichtung (30) aufweist, die zu der Sitzeinheitenlängsrichtung (18) geneigt ausgerichtet ist.

3. Fahrzeugsitz nach einem der vorhergehenden Ansprüche,
**dadurch gekennzeichnet, dass**
die Bankeinheit (16) zumindest zwei differierende Bankeinheitenquererstreckungen (32) aufweist.

4. Fahrzeugsitz nach Anspruch 3,
**dadurch gekennzeichnet, dass**
die Bankeinheit (16) einen ausgehend von dem Bankeinheitenteilbereich (22) der Bankeinheit (16) bezüglich einer Bankeinheitenlängsrichtung (34) sich verjüngenden Verlauf aufweist.

5. Fahrzeugsitz nach einem der vorhergehenden Ansprüche,
**dadurch gekennzeichnet, dass**
die Bankeinheit (16) zumindest eine Bankeinheitenlängserstreckung (36) aufweist, die zu der Sitzeinheitenlängsrichtung (18) geneigt ausgerichtet ist.

6. Fahrzeugsitz nach einem der vorhergehenden Ansprüche,
**dadurch gekennzeichnet, dass**
die Sitzeinheit (14) zumindest eine Unterschenkelstützeinheit (38) und die zumindest eine Sitzbodeneinheit (26) aufweist, die in zumindest einer Sitzstellung zumindest im Wesentlichen in einer Ebene angeordnet sind.

7. Fahrzeugsitz nach Anspruch 6,
**dadurch gekennzeichnet, dass**
die Unterschenkelstützeinheit (38) und die Sitzbodeneinheit (26) in der Sitzstellung mit der Bankeinheitenoberfläche (24) die Liegefläche (28) ausbilden.

8. Fahrzeugsitz nach einem der vorhergehenden Ansprüche,
**dadurch gekennzeichnet, dass**
die Bankeinheit (16) in zumindest einer Sitzstellung zumindest einen Bankeinheitenteilbereich (40) aufweist, der ausgehend von der Sitzeinheit (14) bezüglich der Sitzeinheitenlängsrichtung (18) vor der Sitzeinheit (14) angeordnet ist.

9. System (42) mit zumindest einem Fahrzeugsitz (10) nach einem der Ansprüche 1 bis 8 und mit zumindest einem bezüglich der Sitzeinheitenlängsrichtung (18) hinter dem Fahrzeugsitz (10) angeordneten weiteren Sitz (44), insbesondere mit zumindest einem bezüglich der Sitzeinheitenlängsrichtung (18) hinter dem Fahrzeugsitz (10) angeordneten weiteren Fahrzeugsitz (10) nach einem der Ansprüche 1 bis 8.

10. Passagierkabine, insbesondere Flugzeugpassagierkabine, mit zumindest einem Fahrzeugsitz (10) nach einem der Ansprüche 1 bis 8.

## Claims

1. Vehicle seat, in particular airplane seat, with at least one seat device (12) featuring at least one seat unit (14) which comprises at least one seat bottom unit (26) provided as a sitting surface for a passenger sitting on the seat unit (14), featuring a backrest unit (50), which is supported pivotably at the seat bottom unit (26), and featuring a bench unit (16) which has at least one bench unit surface (24), the bench unit surface (24) being embodied as a lie-down surface, wherein the bench unit (16) is arranged on a side of the seat unit (14) in a transverse direction (20) that is oriented at least substantially perpendicularly to the seat unit longitudinal direction (18), wherein the bench unit (16) comprises, in at least one sitting position, at least one bench unit portion (22) protruding over the seat unit (14) rearwards with respect to the seat unit longitudinal direction (18),
**characterised in that**
the bench unit surface (24) of the bench unit (16) forms together with at least the seat bottom unit (26) of the seat unit (14), in at least one sitting position, a lie-down surface (28) for a passenger.

2. Vehicle seat according to claim 1,
**characterised in that**
the lie-down surface (28) has at least one lie-down surface longitudinal direction (30) which is oriented inclined with respect to the seat unit longitudinal direction (18).

3. Vehicle seat according to one of the preceding claims,
**characterised in that**
the bench unit (16) has at least two differing bench unit transverse extents (32).

4. Vehicle seat according to claim 3,
**characterised in that**
the bench unit (16) has a profile tapering, with respect to a bench unit longitudinal direction (34), starting from the bench unit portion (22) of the bench unit (16).

5. Vehicle seat according to one of the preceding claims,
**characterised in that**
the bench unit (16) has at least one bench unit longitudinal extent (36) which is oriented inclined with respect to the seat unit longitudinal extent (18).

6. Vehicle seat according to one of the preceding claims,
**characterised in that**
the seat unit (14) comprises at least one lower leger support unit (38) and the at least one seat bottom unit (26), which are arranged at least substantially in a plane in at least one sitting position.

7. Vehicle seat according to claim 6,
**characterised in that**
the lower leg support unit (38) and the seat bottom unit (26) form together with the bench unit surface (24) the lie-down surface (28) in the sitting position.

8. Vehicle seat according to one of the preceding claims,
**characterised in that**
the bench unit (16) comprises in at least one sitting position at least one bench unit portion (40) which is arranged, with respect to the seat unit longitudinal direction (18), to the front of the seat unit (14) starting from the seat unit (14).

9. System (42) with at least one vehicle seat (10) according to one of claims 1 to 8 and with at least one further seat (44) arranged to the rear of the vehicle seat (10) with respect to the seat unit longitudinal direction (18), in particular with at least one further vehicle seat (10) according to one of claims 1 to 8, which is arranged to the rear of the vehicle seat (10) with respect to the seat unit longitudinal direction (18).

10. Passenger cabin, in particular airplane passenger cabin, with at least one vehicle seat (10) according to one of claims 1 to 8.

## Revendications

1. Siège de véhicule, notamment siège d'aéronef, avec au moins un dispositif de siège (12), lequel comprend au moins une unité de siège (14) ayant une unité de fond de siège (26) prévue comme surface d'assise pour un passager assis sur l'unité de siège (14), et comprend une unité de dossier (50) supportée pivotablement à l'unité de fond de siège (26) et comprend au moins une unité de banc (16) ayant au moins une surface d'unité de banc (24) implémentée comme surface de couchage,
l'unité de banc (16) étant disposée d'un côté de l'unité de siège (14) dans une direction transversale (20) orientée au moins substantiellement perpendiculairement à la direction longitudinale d'unité de siège (18),
l'unité de banc (16) comportant, dans au moins une position d'assise, au moins une zone partielle d'unité de banc (22) dépassant de l'unité de siège (14), au regard de la direction longitudinale d'unité de siège (18), vers l'arrière,
**caractérisé en ce que**
la surface d'unité de banc (24) de l'unité de banc (16) forme, avec au moins l'unité de fond de siège (26) de l'unité de siège (14), une surface de couchage (28) pour un passager dans au moins une position d'assise.

2. Siège de véhicule selon la revendication 1,
**caractérisé en ce que**
la surface de couchage (28) comprend au moins une direction longitudinale de surface de couchage (30), laquelle est orientée inclinée au regard de la direction longitudinale d'unité de siège (18).

3. Siège de véhicule selon l'une quelconque des revendications précédentes,
**caractérisé en ce que**
l'unité de banc (16) comprend au moins deux étendues transversales d'unité de banc (32) différentes.

4. Siège de véhicule selon la revendication 3,
**caractérisé en ce que**
l'unité de banc (16) présente un cours se rétrécissant, au regard d'une direction longitudinale d'unité de banc (34), à partir de la zone partielle d'unité de banc (22) de l'unité de banc (16).

5. Siège de véhicule selon l'une quelconque des revendications précédentes,
**caractérisé en ce que**
l'unité de banc (16) présente au moins une étendue longitudinale d'unité de banc (36), laquelle est orientée inclinée au regard de la direction longitudinale d'unité de siège (18).

6. Siège de véhicule selon l'une quelconque des revendications précédentes,
**caractérisé en ce que**
l'unité de siège (14) comprend au moins une unité à support de bas-jambe (38) et comprend l'au moins une unité de fond de siège (26), lesquelles sont disposées au moins substantiellement dans un plan en au moins une position d'assise.

7. Siège de véhicule selon la revendication 6,
**caractérisé en ce qu'**
en la position d'assise l'unité à support de bas-jambe (38) et l'unité de fond de siège (26) forment la surface à couchage (28) avec la surface d'unité de banc (24).

8. Siège de véhicule selon l'une quelconque des revendications précédentes,
**caractérisé en ce que**
l'unité de banc (16) comprend en au moins une position d'assise au moins une zone partielle d'unité de banc (40), laquelle est disposée, au regard de la direction longitudinale d'unité de siège (18), à partir de l'unité de siège (14), avant de l'unité de siège (14).

9. Systéme (42) avec au moins un siège de véhicule (10) selon l'une quelconque des revendications 1 à 8 et avec au moins un autre siège (44) disposé, au regard de la direction longitudinale d'unité de siège (18), à l'arrière du siège de véhicule (10), notamment avec au moins un autre siège de véhicule (10) selon l'une quelconque des revendications 1 à 8, lequel est disposé, au regard de la direction longitudinale d'unité de siège (18), à l'arrière du siège de véhicule (10).

10. Cabine á passager, notamment cabine à passager d'aéronef, avec au moins un siège de véhicule (10) selon l'une quelconque des revendications 1 à 8.
